# EUROPEAN PATENT SPECIFICATION

(11) **EP 3 271 780 B1**
(45) Date of publication and mention of the grant of the patent: **29.01.2025**
(21) Application number: 16704460.1
(22) Date of filing: 16.02.2016
(51) Int. Cl.: G02F 1/13357, G09G 3/34, G01J 1/42, G01J 1/06, G01J 1/04, B60Q 3/14, B60Q 3/18, G01J 1/02, G01J 1/32

(54) **DISPLAY APPARATUS AND METHOD**
ANZEIGEVORRICHTUNG UND -VERFAHREN
APPAREIL ET PROCÉDÉ D'AFFICHAGE

(30) Priority: 17.02.2015 GB 201502637
(43) Date of publication of application: 24.01.2018
(73) Proprietor: Jaguar Land Rover Limited, Coventry, Warwickshire CV3 4LF (GB)
(72) Inventor: SKRYPCHUK, Lee, Coventry Warwickshire CV3 4LF (GB)
(74) Representative: Jaguar Land Rover Patents Department
(86) International application number: PCT/EP2016/053224
(87) International publication number: WO 2016/131803

(56) References cited:
- DE-A1- 102009 016 420
- JP-A- 2011 017 802
- US-A1- 2013 271 438
- US-B1- 8 933 916

## Description

### TECHNICAL FIELD

The present disclosure relates to a display apparatus. More particularly, though not exclusively, some embodiments of the present invention relate to a display apparatus including an illuminated display screen for displaying information to a viewer. Some embodiments of the invention are applicable especially, though not exclusively, to a display apparatus for use in vehicles.

### BACKGROUND

It is common for many types of vehicle, such as cars, vans, goods vehicles and public transportation, to be fitted with some kind of display apparatus, often mounted in or on the dashboard or a console generally in front of or in the vicinity of the driver and/or one or more passengers. Typically such a display apparatus includes an illuminated screen via which visual information is displayable, for example satellite navigation information, data concerning operation of the vehicle, in-vehicle entertainment or other visual indicia or content. A common example of such a display apparatus is a liquid crystal display (LCD), in which a LCD screen is lit by one or more backlights to illuminate the visual content formed by the array of LCD elements in the screen. Such LCD display apparatuses may even employ touch-sensitive screens by which operation of the display device may be controlled, e.g. by the driver or a passenger in the vehicle.

A common problem exhibited by known LCD and other display apparatuses, especially (though not exclusively) those that rely on backlit screens, is that under variable ambient lighting conditions it is often necessary or desirable to be able to control the brightness of the illuminated screen in order to provide for optimum viewing thereof. For example in bright daylight an increased level of screen illumination is often required in order to avoid display "washout" so as to be able to view easily and clearly information displayed on the screen, whereas at night or under conditions of reduced daylight a lower level of screen illumination is often sufficient for optimum viewing.

Many known display apparatuses allow for manual control of the screen brightness as necessary or as desired. Moreover, in some known display apparatuses automatic control of the screen illumination brightness is employed. This typically involves a control system which includes an optical detector for continually measuring the ambient light level in the vehicle or in the vicinity of the display apparatus and then automatically adjusting the screen illumination brightness as a function of the measured ambient light level.

However, such known systems for automatic screen illumination adjustment have significant practical shortcomings which make their use and implementation in vehicles far from ideal or at least user-unfriendly. A major problem with such known systems is that the detected ambient light level is usually only measured as a generic parameter from a wide range of possible ambient lighting conditions, indicative only of a generalised light level in substantially the whole interior of the vehicle, or at least in the general vicinity of the optical detector. No regard is given to differing light levels which may occur in different regions within the vehicle or across the area of the display apparatus itself, for example in the case of shadows cast across certain regions thereof. Since the screen illumination brightness is controlled as a function merely of such a generalised ambient parameter, it therefore can lead to inconsistent or uneven levels of visibility of information displayed on the screen in different regions thereof.

It is an object of the present invention to ameliorate or at least partially solve at least some of the shortcomings of known display apparatuses, especially those designed for use in vehicles, and to provide a display apparatus which has enhanced utility and efficiency in providing optimised screen viewability under variable external lighting conditions.

### SUMMARY OF THE INVENTION

Accordingly, aspects of the present invention provide a display apparatus, a vehicle including a display apparatus, a method of displaying information on a display apparatus, a system for controlling illumination of a screen of a display apparatus, and a method of controlling illumination of a screen of a display apparatus.

In one aspect of the invention for which protection is sought there is provided a display apparatus comprising a screen for displaying information to a viewer and illumination means for illuminating the screen, the apparatus further comprising:
direction detecting means for detecting electromagnetic radiation incident on the apparatus; and
control means configured to control the illumination means in dependence on the detected direction of incidence of the electromagnetic radiation;
wherein the directional detecting means comprises a plurality of electromagnetic radiation-sensing means, disposed around the apparatus or the screen thereof;
and wherein the directional detecting means is adapted to ascertain the direction from which the electromagnetic radiation is incident on the detecting means by at least two directional parameters of the incident electromagnetic radiation, the said at least two directional parameters including (i) an angle of incidence between the incident electromagnetic radiation rays and a normal to the detecting means or a reference plane containing the detecting means, and (ii) an azimuth angle of the incident electromagnetic radiation rays relative to a reference axis defined by the detecting means or the screen; and
wherein the screen is a bidirectionally or multidirectionally viewable screen, in which different images, or given images of different brightnesses or intensities, are generated for viewing from at least two different viewing directions or angles relative to the screen, and the control means is configured such that the brightness or intensity of the information displayed along the at least two different viewing directions is determined and controlled independently in dependence on the detected direction of incidence of the electromagnetic radiation.

DE102009016420, JP2011017802 and US20130271438 disclose examples of known display apparatus comprising detecting means for detecting electromagnetic radiation incident on the apparatus and control means configured to control the illumination means in dependence on the detected direction of incidence of the electromagnetic radiation. However, none of these known arrangements discloses at least the features of the screen being a bidirectionally or multidirectionally viewable screen, in which different images, or given images of different brightnesses or intensities, are generated for viewing from at least two different viewing directions or angles relative to the screen, and the control means being configured such that the brightness or intensity of the information displayed along the at least two different viewing directions is determined and controlled independently in dependence on the detected direction of incidence of the electromagnetic radiation.

In another aspect of the invention for which protection is sought there is provided a vehicle including a display apparatus according to the preceding aspect.

In a further aspect of the invention for which protection is sought there is provided a method of displaying information on a display apparatus, the apparatus including illumination means for illuminating a screen via which information is visibly displayable to a viewer, wherein the method comprises:
detecting electromagnetic radiation incident on the apparatus using a plurality of electromagnetic radiation-sensing means, disposed around the apparatus or the screen thereof; and
controlling the illumination means in dependence on the incident electromagnetic radiation detected;
   wherein the detecting of electromagnetic radiation incident on the apparatus comprises detecting a direction from which the electromagnetic radiation is incident thereon by at least two directional parameters of the incident electromagnetic radiation, the said at least two directional parameters including (i) an angle of incidence between the incident electromagnetic radiation rays and a normal to the detecting means or a reference plane containing the detecting means, and (ii) an azimuth angle of the incident electromagnetic radiation rays relative to a reference axis defined by the detecting means or the screen, and the controlling of the illumination means comprises controlling the illumination means in dependence on the detected direction of incidence of the electromagnetic radiation,
wherein the screen is a bidirectionally or multidirectionally viewable screen, in which different images, or given images of different brightnesses or intensities, are generated for viewing from at least two different viewing directions or angles relative to the screen, and the method comprises determining and controlling the brightness or intensity of the information displayed along the at least two different viewing directions independently in dependence on the detected direction of incidence of the electromagnetic radiation.

In yet another aspect of the invention for which protection is sought there is provided a system for controlling illumination of a screen of a display apparatus, the apparatus including illumination means for illuminating the screen via which information is visibly displayable to a viewer, wherein the system comprises:
detecting means for detecting electromagnetic radiation incident on the apparatus; and
control means for controlling the illumination means in dependence on the incident electromagnetic radiation detected by the detecting means;
   wherein the detecting means is a directional detecting means comprising a plurality of electromagnetic radiation-sensing means, disposed around the apparatus or the screen thereof, for detecting a direction from which the electromagnetic radiation is incident thereon by at least two directional parameters of the incident electromagnetic radiation, the said at least two directional parameters including (i) an angle of incidence between the incident electromagnetic radiation rays and a normal to the detecting means or a reference plane containing the detecting means, and (ii) an azimuth angle of the incident electromagnetic radiation rays relative to a reference axis defined by the detecting means or the screen, and the control means is operable to control the illumination means in dependence on the detected direction of incidence of the electromagnetic radiation; and
wherein the screen is a bidirectionally or multidirectionally viewable screen, in which different images, or given images of different brightnesses or intensities, are generated for viewing from at least two different viewing directions or angles relative to the screen, and the control means is configured such that the brightness or intensity of the information displayed along the at least two different viewing directions is determined and controlled independently in dependence on the detected direction of incidence of the electromagnetic radiation.

In still a further aspect of the invention for which protection is sought there is provided a method of controlling illumination of a screen of a display apparatus, the apparatus including illumination means for illuminating the screen via which information is visibly displayable to a viewer, wherein the method comprises:
detecting electromagnetic radiation incident on the apparatus using a plurality of electromagnetic radiation-sensing means, disposed around the apparatus or the screen thereof; and
controlling the illumination means in dependence on the incident electromagnetic radiation detected;
   wherein the detecting of electromagnetic radiation incident on the apparatus comprises detecting a direction from which the electromagnetic radiation is incident thereon by at least two directional parameters of the incident electromagnetic radiation, the said at least two directional parameters including (i) an angle of incidence between the incident electromagnetic radiation rays and a normal to the detecting means or a reference plane containing the detecting means, and (ii) an azimuth angle of the incident electromagnetic radiation rays relative to a reference axis defined by the detecting means or the, and the controlling of the illumination means comprises controlling the illumination means in dependence on the detected direction of incidence of the electromagnetic radiation,
wherein the screen is a bidirectionally or multidirectionally viewable screen, in which different images, or given images of different brightnesses or intensities, are generated for viewing from at least two different viewing directions or angles relative to the screen, and the method comprises determining and controlling the brightness or intensity of the information displayed along the at least two different viewing directions independently in dependence on the detected direction of incidence of the electromagnetic radiation.

In some embodiments of the invention the electromagnetic radiation that is detected by the detecting means, and in dependence on whose direction of incidence thereon the illumination means is controlled by the control means, comprises electromagnetic radiation with wavelengths at least in part in the visible region of the electromagnetic spectrum, i.e. visible light. Such light may come from a variety of external or environmental sources, especially the sun, but alternatively or also possibly from one or more other sources such as the moon, street lighting, light from other vehicles, or light from within the vehicle in which the display apparatus is intended for use.

In some embodiments however the electromagnetic radiation that is detected by the detecting means, and in dependence on whose direction of incidence thereon the illumination means is controlled by the control means, may comprise electromagnetic radiation with wavelengths at least in part in a non-visible region of the spectrum, such as infrared (IR) or ultraviolet (UV) light.

Thus, as used herein the term "light" is to be construed broadly, and is to be understood as encompassing all such wavelengths of electromagnetic radiation, not only visible light, but also IR, UV and combinations of either thereof with visible light.

In embodiments of the invention the screen of the display apparatus, on or within which information is displayable to a viewer, may be generally of any known type, such as are known and used in a wide variety of commercially available electronic and optical display devices. The screen is advantageously substantially planar, but other shapes, e.g. curved, may be possible. LCD screens, or screens comprising one or more arrays of other optical elements, which are controllable electronically to permit transmission - or not - of visible light through the screen to form pixellated information, may be employed. The screen may or may not have a touch-sensitive layer applied to its upper surface in order to provide touchscreen functionality for controlling the display apparatus or particular functions thereof.

A wide variety of visual information may be displayed by the screen of the apparatus, depending on the purpose and functionality of the apparatus. Examples include visual information relating to satellite navigation, data concerning operation of the vehicle, in-vehicle entertainment such as games or video-based content. The invention may also be applicable to display apparatuses for other uses, e.g. non-vehicle uses, such as domestic or workplace computer screens, monitors, TV's, tablets, mobile phones or other electronic devices for displaying any type of visual content.

In some embodiments of the invention the illumination means may serve to illuminate the screen containing, bearing or conveying the information to be displayed. In some embodiments, especially those in which the screen comprises a LCD device, the illumination means may be provided as a discrete lighting means, independent of the screen itself, such as in the form of a backlight element which may be located behind and/or adjacent the screen. The backlight element may comprise any suitable number of light-emitting devices such as LED's (light emitting diodes), filament or halogen bulbs, optionally an array or a plurality of light emitting devices.

In some embodiments the illumination means may be constituted by components or elements of the screen itself, for example in the case of screens based on one or more arrays of LED's or other light-emitting devices which are provided or mounted within the structure of the screen and are selectively illuminatable in order to create directly the e.g. pixellated information to be displayed.

Thus it is to be understood that in some embodiments of the invention the screen and the illumination means may be discrete components of the apparatus or they may be constituted by substantially one and the same component, or one and the same set or array of components, but acting bifunctionally, i.e. to generate self-illuminated information data on or in the screen.

In some embodiments of the invention the display apparatus may comprise directional detecting means for detecting a direction from which the light (or other electromagnetic radiation) is incident thereon. In some embodiments the directional detecting means may be constructed and/or arranged for detecting a direction from which the light (or other electromagnetic radiation) is incident on at least the detecting means itself. In some embodiments, in particular those in which the directional detecting means is provided on or in or adjacent the screen of the apparatus, the detecting means may be constructed and/or arranged for detecting a direction from which the light (or other electromagnetic radiation) is incident on the screen itself.

The direction from which the light (or other electromagnetic radiation) is incident on the detecting means of the apparatus is defined by at least two directional parameters of the incident light. The said at least two directional parameters include an angle of incidence between the incident light rays and a normal to the detecting means or a reference plane containing the detecting means. The said angle of incidence may alternatively be defined as an angle of elevation of the incident light rays relative to the detecting means or the reference plane containing the detecting means, if the said angle of incidence is subtracted from 90 degrees. In embodiments in which the directional detecting means is provided on or in or adjacent the screen of the apparatus, the said reference plane may substantially contain, or be substantially coincident with, or be parallel to, a general plane of the screen itself.

The directional parameter constituting an angle of incidence or elevation may thus notionally be thought of as a measure of the angle of deviation of the incident light rays from falling on the detecting means (or screen itself, as the case may be) head-on or straight-on.

The said at least two directional parameters include (i) the aforementioned angle of incidence or elevation, and (ii) an azimuth angle of the incident light rays relative to a reference axis defined by the detecting means (or screen itself, as the case may be). Thus the azimuth angle may be defined as the angle between (a) a plane containing the incident light rays and normal to the said reference plane, and (b) the said reference axis, which may for example be defined by a generally front-to-rear or side-to-side axis of the detecting means (or screen itself, as the case may be).

This second directional parameter (ii) may thus notionally be thought of as a measure of the rotational position of the light source relative to the detecting means (or screen itself, as the case may be) in a general plane containing it, or coincident with it, or parallel to it. Optionally, it may notionally be thought of as a measure of the rotational position of the light source relative to the front-to-rear (or side-to-side) axis of the detecting means (or screen itself, as the case may be).

In some embodiments of the invention the directional detecting means may be of various constructions and/or arrangements and may function in various ways to detect the one or more directional parameters which in combination define the overall direction from which the light is incident thereon.

The directional detecting means comprises a plurality of light- (or other electromagnetic radiation-) sensing means, disposed on or around the apparatus or the screen thereof, e.g. mounted on or in a frame or bezel thereof, optionally in a symmetrical and/or equiangular configuration. For example, any number of light-sensing means of from 2 up to about 3 or 4, or even up to about 5, or 6, or 8, or possibly even more, may be provided.

Each such light-sensing means may be constructed and/or arranged such that it is sensitive to light (or other electromagnetic radiation to be detected) so as to provide a signal output proportional to or otherwise dependent on the brightness or intensity of light (or other electromagnetic radiation to be detected) incident upon it. Examples of suitable light-sensing means include photodiodes, phototransistors, photoresistors, or any other device whose e.g. electrical characteristics vary with the brightness or intensity of light (or other electromagnetic radiation to be detected) falling or incident upon it.

In some embodiments the directional detecting means may further comprise one or more light-(or other electromagnetic radiation-) directing means in association with the or respective light-sensing means, for directing at least a proportion of incoming light (or other electromagnetic radiation to be detected) so as to be incident upon it or them.

Examples of suitable light-directing means include one or more waveguide devices or collimator devices.

Optionally, the one or more light-directing means is/are constructed and arranged such that incoming light is incident upon different ones of the light-sensing means with different brightnesses or intensities depending on the direction of the incident light. In this manner different ones of the light-sensing means may experience different brightnesses or intensities of incident light emanating from a given light source, whereby resulting differentials as between sensed light brightnesses or intensities at different ones of the light-sensing means result in corresponding differentials as between signal outputs of the respective light-sensing means. By comparing, such as by use of processing means (as referred to hereinbelow), such differentials in signal outputs as between different light-sensing means, an overall direction of incidence, optionally as defined by the above-mentioned at least two directional parameters of the incident light, can thus be determined or calculated.

In some embodiments the directional detecting means may comprise a plurality of light-directing means each associated with a respective one of a plurality of light-sensing means, for directing at least a proportion of incoming light so as to be incident on different ones of the plurality of light-sensing means with respective different brightnesses or intensities.

In some other embodiments the directional detecting means may comprise one or more light-directing means being, or each being, associated with two or more light-sensing means, for directing at least a proportion of incoming light so as to be incident on different ones of the two or more light-sensing means with respective different brightnesses or intensities.

Some exemplary constructions and/or arrangements of light-directing means which may be suitable for use in various embodiments of the invention are discussed further hereinbelow.

In some embodiments the directional detecting means may further comprise processing means for receiving output signals from each of the plurality of light-sensing means, comparing the received output signals, and providing an output to the control means of the apparatus which is a function of the overall direction of incidence of the light on the detecting means, optionally as defined by the above-mentioned at least two directional parameters of the incident light.

The output of the processing means that is then fed to the control means may be correlated in a predetermined manner to an optimised level of brightness or intensity of the illumination means. This may be in order that the screen may be illuminated under control of the control means for optimum visibility or viewability under particular lighting conditions. For example the correlation may be performed by comparing the output of the processing means with stored data, for example data stored in a look-up table or other database, in order to determine an optimum brightness or intensity level of the illumination means for any given processing means output.

The processing means may be provided as a dedicated and/or discrete component of the display apparatus itself, or it may be provided as part of a larger or more extensive management or control system of e.g. a vehicle in which the display apparatus is incorporated or fitted. In some embodiments the processing means may be comprised by suitable electronics, a microprocessor, computer and/or software.

In some embodiments, the use of directional detecting means comprising an array of a plurality of light-sensing means in combination with one or more, or one or more respective, light-directing means, in conjunction with appropriate processing/comparator means, enables the direction of incidence of incoming light on the apparatus to be quantitatively measured in three dimensions, and an output to the control means generated as a function of that quantitative direction measurement. The control means then controls the level of illumination of the illumination means, especially its brightness or intensity, in accordance with that output, so that the resulting brightness, intensity and/or contrast characteristic(s) of the screen which displays the information is optimised for maximum or most desirable visibility or viewability. Accordingly, as the direction of incident incoming light may change, such as upon a changing of a direction of travel of a vehicle incorporating the display apparatus, or a changing of a direction of incoming light relative to the vehicle, an optimised visibility or viewability of information displayed on the screen may be achieved and/or maintained.

A desired or appropriate level of illumination of the illumination means for any given direction of incidence of incoming light, as controlled by the control means in dependence on the output from the processing/comparator means, may be correlated to an overall resulting optimum level of brightness, intensity and/or contrast characteristic(s) of the screen by means of for example factory- or user-set calibration. Alternatively or additionally, historical data from user-set values of screen brightness, intensity and/or contrast characteristic(s) for varying directions of incidence of incoming light, as determined from historical use of the apparatus, may also be used for such correlation, in order to provide optimised screen illumination and thus visibility or viewability for ongoing variable incoming lighting directions.

In some embodiments of the display apparatus of the invention a single illumination means may be provided, in order to provide a generally substantially uniform level of brightness or intensity across at least a portion of the screen, advangtageously at least across substantially the whole of the visible or viewable area thereof.

In some other embodiments a plurality of illumination means may be provided, in order to provide a plurality of independently illuminatable regions of the screen which may be controlled by the control means so as to have different brightnesses or intensities. Each such independently illuminatable screen region may if desired be independently controlled by its own respective directional detecting means and control means.

In further other embodiments the screen is of a bidirectionally (or multidirectionally) viewable type, in which different images, or given images of different brightnesses or intensities are generated for viewing from at least two different viewing directions or angles relative to the screen. Such a bidirectional (or multidirectional) screen may be useful for example in vehicles where a different screen image, or an image at different brightnesses or intensities, is desired to be displayed to each of a plurality of, e.g. two, occupants of the vehicle spaced apart from one another, e.g. a driver and a front-seat passenger. The brightness or intensity of the image displayed along the at least two different viewing directions may each be determined independently, in dependence on the direction of incident light. Thus in the case where light is incident on the screen from a direction that reduces the image contrast as viewed along a first one of the plurality of viewing directions more than the image contrast as viewed along a second one of the plurality of viewing directions, the brightness of intensity of the image displayed along the first viewing direction may be arranged to be greater than that displayed along the second viewing direction.

According to various embodiments of the invention, various specific constructions and/or arrangements of the above-defined light-sensing means and light-directing means may be used in the directional detecting means:
In one embodiment the directional detecting means of the apparatus may comprise a plurality of light-sensitive devices arranged around at least one waveguide element or device which channels, transmits or propagates light incident thereupon into or onto the light-sensitive devices therearound. Examples of suitable light-sensitive devices include the above-mentioned photodiodes, phototransistors, photoresistors, or any other device whose e.g. electrical characteristics vary with intensity of light falling thereupon. Optionally, the at least one waveguide element or device channels, transmits or propagates light incident thereupon into or onto respective ones of the light-sensitive devices with respectively different brightnesses or intensities dependent on the relative position of each respective light-sensitive device with respect to the direction of incidence of the incoming light upon the at least one waveguide element or device.

In other words, incoming light incident upon the at least one waveguide element or device may be channelled, transmitted or propagated therewithin in various different directions, and the respective brightness or intensity of the channelled, transmitted or propagated light in any given direction therewithin may depend on the angle, optionally an azimuth angle, between that said direction and the direction of incidence of the incident incoming light. Thus, by appropriate positioning of the light-sensitive devices around the at least one waveguide element or device, each light-sensitive device may provide a respectively different output signal characteristic of the brightness or intensity of the light incident upon it, which may in turn be dependent on its azimuth angular positioning relative to the direction of incidence of the incident incoming light.

In the above-defined arrangement, the plurality of light-sensitive devices may be located and configured symmetrically and/or equi-angularly around the periphery or perimeter of, or at or adjacent a lateral edge of, the at least one waveguide element or device, whereby light channelled, transmitted or propagated through the waveguide element or device is directed onto or into each respective light-sensitive device with a brightness or intensity which is dependent on the azimuth angular positioning of the respective light-sensitive device relative to the direction of incidence of the incident incoming light.

One example of a suitable waveguide element or device is a sheet or layer of optical material, e.g. of a glass or a plastics material of suitable optical properties, located adjacent and optionally in front of the screen of the apparatus. Such a sheet or layer of optical material may if desired be constituted by a functional touchscreen sheet or layer already present in the display apparatus and applied on or in front of the screen itself for the purpose of controlling at least some of the operations or functions of the apparatus. Alternatively, the sheet or layer of optical material may be applied as a discrete dedicated element solely for the purpose of acting as the waveguide element or device for directing or transmitting incident light onto or into the respective light-sensitive devices in the manner defined above.

Optionally, the above waveguide element or device being the aforementioned sheet or layer of optical material may act to channel or direct incident light within itself by means of the phenomenon of total internal reflection (TIR). This phenomenon enables light waves to be internally reflected from a material-air interface back into the body of the material once they have entered the body of the material, but only upon condition that the angle of incidence of the light rays on the interface exceeds a maximum angle of incidence defined by the relative refractive indices (or densities) of the material and the air (or other medium) which surrounds it. That maximum angle of incidence beyond which total internal reflection can occur is typically termed the "critical angle".

In the context of the above embodiments of the present invention, the occurrence of TIR within the body of the waveguide material only upon condition that the angle of incidence of the incident light exceeds the material's critical angle serves to substantially limit those light rays that actually reach the respective light-sensitive devices to those that have angles of incidence above the critical angle. This principle may therefore serve as an inherent "filter" to limit signals output from the respective light-sensitive devices to those corresponding to relatively high angles of incidence of incoming light. This may thus serve to enhance the effectiveness and/or sensitivity of the directional detecting means for detecting the overall direction of incidence of incoming light reaching the apparatus or screen thereof.

Furthermore it may be expected that when the phenomenon of TIR is extended to a plurality of orthogonal dimensions within the general plane of the waveguide element or device, as may be the case with for example four equi-angularly positioned light-sensitive devices around the periphery of a single, e.g. generally rectangular, waveguide sheet or layer, then this may further enhance the overall effectiveness and/or sensitivity of the directional detecting means for detecting the overall direction of incidence of incoming light reaching the apparatus or screen thereof.

Another example of a suitable waveguide device is an arrangement of one or more, optionally a plurality of, reflecting means, for chanelling or directing by reflection incident incoming light onto or into the respective light-sensitive devices positioned therearound. Any suitable configurational arrangement of reflecting means may be employed. Advantageously, each light-sensitive device may have associated therewith a respective reflecting means for channelling or directing incident incoming light onto or into it.

In one exemplary arrangement employing such a waveguide device, a plurality of light-sensitive devices each have associated therewith a respective one of a plurality of reference light-emitting devices, e.g. LED's, distal therefrom and for transmitting a reference light beam of a baseline brightness or intensity across and/or adjacent a viewing face of the display screen and onto or into the respective light-sensitive device via one or more of the reflecting means. Also transmitted onto or into the said respective light-sensitive device, optionally at least partially by the same reflecting means, is incident incoming light whose own brightness or intensity may, as discussed above, be dependent on the azimuth angular positioning of the respective light-sensitive device relative to the direction of incidence of the incident incoming light. The incoming incident light thus combines with the reference beam to create a combined beam of enhanced brightness or intensity in comparison with that of the reference beam alone.

By use of comparator means, for example as part of processing means for processing output signals from the various light-sensitive devices, to calculate a difference between the said baseline brightness/intensity of each reference light beam and an enhanced respective brightness or intensity of the combined beam at each respective light-sensitive device, a respective signal output may be generated which is dependent upon, e.g. proportional to, the said baseline-to-incident incoming brightness/intensity difference at that respective light-sensitive device. The signal outputs from the various light-sensitive devices may then, as already referred to above, be processed by processing means which receives the signal outputs from each of the light-sensitive devices, compares the received output signals, and provides an output to the control means of the apparatus which is a function of the overall direction of incidence of the light on the detecting means.

The output of the processing means may then be fed to the control means as before in a correlated manner to provide an optimised level of brightness or intensity required by the illumination means in order to provide optimum visibility or viewability of information displayed on the screen of the apparatus.

In another embodiment, the directional detecting means of the apparatus may comprise a plurality of light-sensitive devices each associated with a respective, or a respective portion of, one or more collimating devices for channelling incident light onto or into the, or each respective, light-sensitive device. Optionally, the plurality of light-sensitive devices are located and configured symmetrically and/or equi-angularly generally around the periphery or perimeter of, and optionally adjacent a viewing face of, the display screen of the apparatus. Further optionally the one or more collimating devices is/are also located and configured symmetrically and/or equi-angularly generally around the periphery or perimeter of, and further optionally adjacent a viewing face of, the display screen. Thus, incoming light that is incident on the screen itself may be collimated and directed onto or into the or each of the respective light-sensitive devices for generating respective signal outputs from the or each light-sensitive device, as before, which after comparative processing provide an output indicative of the overall direction of incidence of the incoming light incident upon the screen.

The or each collimating device may for example comprise a collimating light pipe or light channel. Each light pipe or light channel may if desired or as necessary be provided with an internal light-reflective or -diffusive coating or layer in order to impart or enhance its collimating and/or light-transmitting function.

In some forms of the aforementioned collimating devices, they may be oriented such that their longitudinal collimating axes are substantially parallel to the general plane of the display screen adjacent to which they are positioned. In such orientations it may be arranged that substantially only, or predominantly, incident light which has been reflected from the viewing face of the screen within a prescribed relatively narrow range of angles of incidence is that light which can be collimated by the respective collimating devices and thus be directed towards the respective light-sensitive devices associated therewith.

This arrangement may serve to improve the directional sensitivity of the apparatus in generating an output for the control means which more accurately reflects an overall direction of incidence of incoming light on the screen of the apparatus and to control the illumination means accordingly.

Alternatively, in other forms of the aforementioned collimating devices, they may be oriented such that their longitudinal collimating axes are substantially non-parallel to the general plane of the display screen adjacent to which they are positioned. In this case their longitudinal collimating axes may be oriented at an angle of e.g. from about 5 or 10 or 15 or 20 degrees up to about 30 or 40 or 50 or 60 or even up to about 70 degrees relative to the general plane of the screen. In such orientations it may be arranged that substantially only, or predominantly, incident light which has not been reflected from the viewing face of the screen, and thus which has emanated directly from the light source, is that light which can be collimated by the respective collimating devices and thus be directed towards the respective light-sensitive devices associated therewith.

This arrangement may also serve to improve the directional sensitivity of the apparatus in generating an output for the control means which more accurately reflects an overall direction of incidence of incoming light on the screen of the apparatus and to control the illumination means accordingly.

In some embodiments of the invention the display apparatus may comprise control means which is operable to control the illumination means in dependence on the detected direction of incidence of the incoming light (or other electromagnetic radiation) on the apparatus, as defined by the output of the processing means of the detecting means.

Thus in some embodiments such control means may advantageously include a control input for receiving an output signal generated by the processing means of the detecting means, which has generated a signal responsive to or dependent on the overall direction of incidence of incoming light on the apparatus, which output signal from the detecting means is correlated to a predetermined level of illumination of the illumination means for achieving optimum visibility or viewability of the display screen to be illuminated thereby, and a control output for controlling the illumination means in a correlated manner in accordance with the inputted detecting means' output signal.

As with the processing means of the detecting means of some embodiments, in some embodiments the control means may be provided as a dedicated and/or discrete component of the display apparatus itself, or it may be provided as part of a larger or more extensive management or control system of e.g. a vehicle in which the display apparatus is fitted. In many practical embodiments the control means may also be constituted by suitable electronics, a microprocessor, computer and/or software.

In some embodiments of the invention one or more additional features of control may be provided in order to further enhance the utility of the apparatus in various practical applications. For example:
In some embodiments the control means may be operable to control the illumination means in dependence on the detected direction of incidence of the light (or other electromagnetic radiation) on the apparatus only when an output from the detection means exceeds a prescribed first threshold value.

In some embodiments the control means may be operable to control the illumination means only when an output from the detection means exceeds a prescribed first threshold value for a prescribed period of time, or a prescribed number of times over a predetermined time period.

In some embodiments the control means may be operable to control the illumination means in a reverse direction, for example when an output from the detection means drops below a prescribed second threshold value, or drops below such a prescribed second threshold value for a prescribed period time or a prescribed number of times over a predetermined time period. The second threshold value may advantageously be different, especially lower, than the first threshold value, in order to impart a hysteresis-type behaviour to the system and/or to avoid mode-chattering as between different levels of brightness or intensity of the display screen.

In some embodiments the control means may be operable to control the illumination means in dependence on a detected magnitude of brightness or intensity of the incident light reaching the display apparatus, as detected and measured by the directional detecting means. This feature may allow for further optimisation of the system in achieving an overall optimised level of illumination brightness or intensity of the display screen, and thus visibility/viewability thereof, which takes account of background or ambient light levels.

Whilst embodiments of the present invention have been defined above with particular exemplary reference to vehicles such as cars, it is to be understood that the invention in its various aspects is applicable to display apparatuses for use in, or when used in, a wide variety of vehicles and other contexts. Such vehicles may include for example cars, vans, goods or freight vehicles, motorcycles, road vehicles for public transportation such as buses, trains, trams, cable-carried vehicles, water-borne vehicles or craft, aircraft and even spacecraft. In other contexts the invention may also be useful for display apparatuses which may be carried on an individual's person or in other scenarios in which a display apparatus is subject to variable environmental lighting parameters and some degree of screen visibility/viewability optimisation is desirable. Examples of such other contexts may include display apparatuses typically used in various domestic or workplace settings, such as computer screens, monitors, TV's, tablets, mobile phones or other electronic devices for displaying any type of visual content.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

Some embodiments of the present invention will now be described in detail, by way of example only, with reference to the accompanying drawings, in which:
Figure 1 is a front face view of a display apparatus according to an embodiment of the present invention;
Figure 2 is a schematic cross-sectional side view of the embodiment of Figure 1;
Figure 3 is a schematic cross-sectional side view of a display apparatus according to another embodiment of the present invention;
Figure 4 is a schematic cross-sectional side view of a display apparatus according to a further embodiment of the present invention; and
Figure 5 is a schematic cross-sectional side view of a display apparatus according to a still further embodiment of the invention.

### DETAILED DESCRIPTION OF EMBODIMENTS

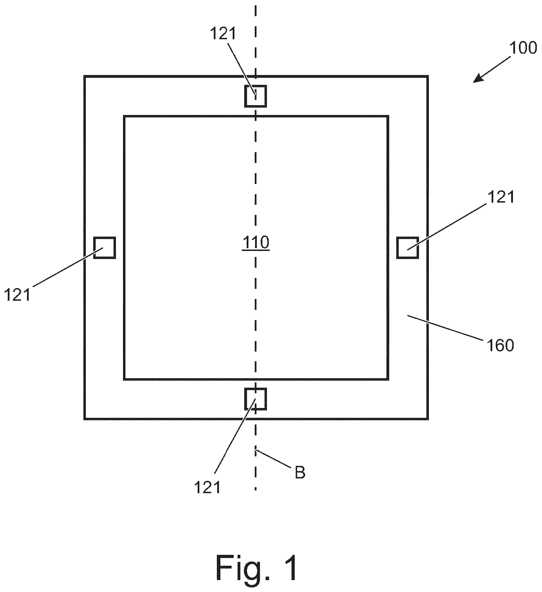

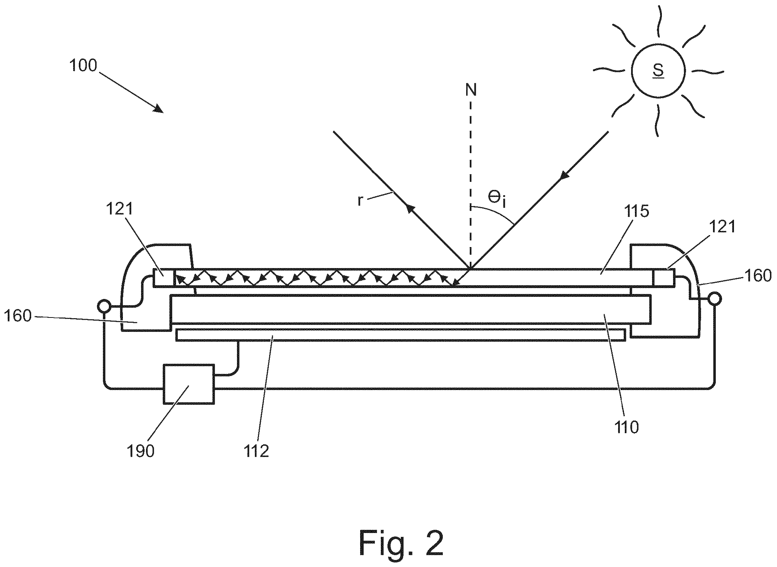

Referring firstly to Figures 1 and 2, a first embodiment of display apparatus 100 according to the invention comprises a display screen 110, such as a known LCD screen, which is illuminated from behind, i.e. from its lowermost side as shown in Figure 2, by a backlight 112, such as an array of LED's or one or more other light-emitting devices. The display apparatus 100 may be for displaying a wide variety of driver- or passenger-relevant information, such as satellite navigation information, operational data for the vehicle, or video-based entertainment, or other visual information, and the apparatus itself may for example be mounted in a dashboard or central console of a vehicle in which display of such information to a driver and/or passenger is intended.

The screen 110 is mounted in a bezel or frame 160, e.g. of plastics material and/or metal. The screen 110 may be a touch-sensitive type of screen, in which case it is provided with an overlaid touch-sensitive coating or layer 115 formed predominantly of a glass or plastics material and electrically connected to the display apparatus's overall control system, for providing a touch-sensitive functionality for controlling at least some of the apparatus's operations or functions. Examples of such touchscreens are well-known in the art. Even if the screen 110 is not of the touch-sensitive type, then in this embodiment it is advantageous to provide the aforementioned upper or front coating or layer 115 of an optical glass or plastics material.

In either case the upper or front optical coating or layer 115 acts as a waveguide device for channelling or transmitting light incident on the screen 110 through the body of the optical coating or layer 115 by total internal reflection (TIR) onto or into an array of individual light-sensitive devices 121 mounted in the bezel or frame 160 of the screen 110 and configured symmetrically and/or equi-angularly therearound. In this example four such light-sensitive devices are provided, each located midway along each lateral side of the screen 110, which in this illustrated example is generally rectangular in shape. However it is to be understood that in principle any number of such light-sensitive devices may be employed. The light-sensitive devices 121 may be for example photodiodes or phototransistors, or even photoresistors, examples of all of which are well known and widely commercially available.

Each of the photodiodes or phototransistors (or photoresistors) 121 is electrically connected into a control system 190 for the display device 100, which control system 190 may be a dedicated control system of the display apparatus 100 alone or may be an integrated part of an overall electronic control system of the vehicle in which the display apparatus is incorporated or fitted. The control system 190 is itself electrically connected to the backlight or other illuminator device 112.

Under variable external lighting conditions, such as in daylight by virtue of light rays from the sun S, typically the vehicle experiences instances or episodes of relative extremes of direction of incidence of the incoming light on the display screen 110 which make it difficult - or perhaps even substantially impossible in extreme cases - for the driver and/or passenger to see or view known display screens with adequate brightness, intensity, clarity and/or contrast such that the information displayed thereon is optimally visible or viewable. This represents a failure mode of known display screens. In the present embodiment of the invention, the direction of incidence of the incoming light on the screen 110 is detected and measured, and the result therefrom used to control the level of illumination of the backlight 112 in order to adjust the brightness/intensity level of the illuminated screen 110 as a function of the incidence direction of the incoming light.

In Figure 2 a ray of incoming light from the sun S which is shown incident on the screen 110 at an angle of incidence θᵢ to a direction N normal to a plane of the screen 110. If the angle θ₁ is greater than the critical angle of the upper optical layer 115, the ray is caused by the optical properties of the overlaid optical coating or layer 115 to undergo total internal reflection (TIR) within the body of the optical layer 115 (as illustrated by the arrows therewithin as shown in Figure 2). Generally, incoming light rays at angles of incidence θᵢ less than the critical angle will be reflected back out of the optical layer 115, such as represented by outgoing light ray *r.* Conversely, incoming light rays at angles of incidence θᵢ greater than the critical angle will be refracted by TIR and thereby transmitted or channelled through and along the optical layer 115 towards the respective light-sensitive detecting devices 121 located around the perimeter of the optical layer 115.

As a result of the differential reflection/refraction by TIR of incoming light rays in the body of the optical layer 115, different ones of the light-sensitive detecting devices 121 will experience a different brightness or intensity of light reaching it/them and falling thereon, depending on the angle of incidence θᵢ of the incoming light rays. Since therefore the angle of incidence θᵢ can be thought of as a measure of the angle of elevation (when subtracted from 90º) of the sun S in the sky, this directional parameter of the light source - in this case the sun - can be quantitatively detected and measured by means of an output signal generated by each respective light-sensitive device 121 which is dependent upon, and optionally proportional to, that angle of elevation or incidence of the incoming light.

The arrangement as shown in Figure 2 shows the apparatus principally only in two dimensions, but there is another dimensional parameter of the incoming sunlight, which is the azimuth angle thereof relative to a front-to-rear or side-to-side reference axis of the screen 110 or apparatus 100. Such a reference axis may for instance be defined by an imaginary line B bisecting any given pair of sides of the rectangular screen as shown in Figure 1. By use of the four light-sensitive devices 121 and utilising the effect of TIR that occurs also in a direction perpendicular to the plane of the drawing of Figure 2, as well as within the plane of the drawing of Figure 2 itself, an analogous differential in brightness or intensity of light reaching the other two light-sensitive detecting devices orthogonal to the two such devices shown in Figure 2 also occurs. This therefore enables a three-dimensional positioning of the incoming incident light rays relative to the screen 110 to be detected and measured, by means of appropriate comparison and processing of the respective output signals from each of the light-sensitive devices 121. Such signal comparison and processing may be carried out by appropriate electronic hardware and/or software of the apparatus's overall control system 190.

Once the necessary comparison and signal processing has been performed, an output signal of the control system 190 is passed to the backlight or other illumination means 112 for controlling under a predetermined correlation relationship its brightness or intensity for optimum visibility or viewability of the screen. Such control may be for example by means of factory- or user-set calibration. Alternatively or additionally it may be by means of stored historical data.

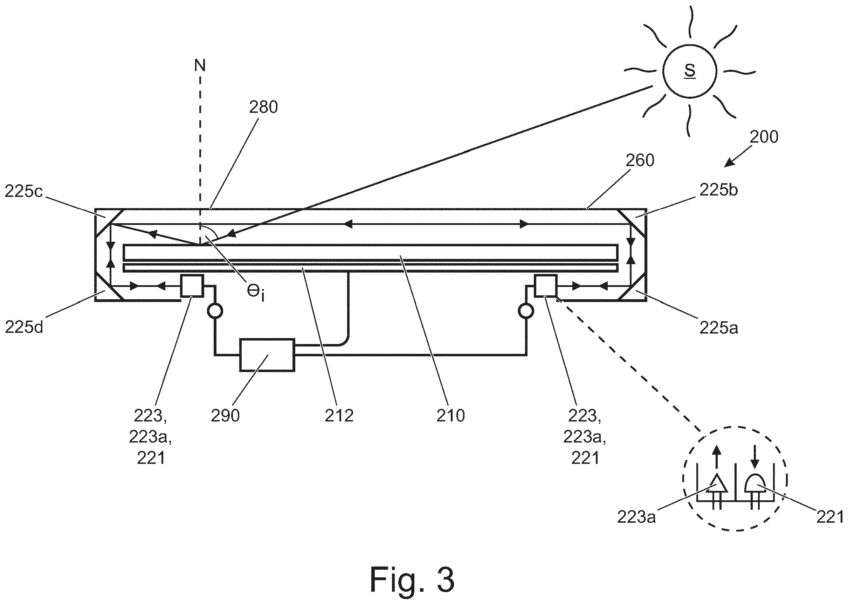

Figure 3 shows a second embodiment of display apparatus 200 according to the invention. Features of this embodiment that correspond in form and/or function to those of the first embodiment of Figures 1 and 2 are referred to by the same reference numerals but incremented by 100.

In the embodiment of Figure 3 a different type of waveguide device is utilised for selectively collecting and transmitting incoming incident light within particular preferred ranges of angles of incidence and azimuth angles onto or into the respective light-sensitive devices 221 positioned around the waveguide device. The waveguide device here comprises an arrangement of at least two pairs of at least partially reflective mirrors 225a, 225b, 225c, 225d which are positioned substantially as shown in the Figure such as to create or define a light path having the following features.

Firstly, located at each distal end of the light path is a pair of devices 223, one of which is a reference light-emitting device 223a, such as a LED, and the other of which is a respective light-sensitive device 221, such as a photodiode or phototransistor, as before. The two devices may conveniently be mounted on or in a unitary housing or holder. Each pair of devices 223a, 221 generates a bidirectional push-pull-type of reference light beam (which may be in the visible or possible at least partially in the IR region of the spectrum) which is directed across and/or adjacent a viewing face of the display screen 210. The reference beam defines a baseline brightness/intensity signal against which a brightness/intensity signal of an enhanced beam being a combination of the reference beam and the incoming incident light from the sun S can be compared and quantitatively measured.

Secondly, the upper pair of mirrors 225b and 225c may advantageously be semi-reflective or semi-transparent so as to allow some incoming incident light to pass therethrough and some to be reflected thereby so as to reach the lower two mirrors 225a and 225d, which may advantageously be substantially 100% reflective and therefore reflect the incoming light around the illustrated light path and onto or into the respective light-sensitive detecting devices 221. Furthermore, the bezel or frame 260 of the apparatus may be substantially opaque so as to allow prevent incident light from passing therethrough and reaching the reflecting mirrors 225a, 225d. In some embodiments the bezel or frame 260 may be at least partially transparent.

In this manner, in addition to the light generated by the LEDs or other reference light beam-emitting devices 223a being transmitted around the illustrated light path as the baseline reference light beam, also transmitted around at least a portion of this path is a proportion of the incoming incident light whose ability to reach the respective light-sensitive detecting devices 221 via the various mirrors or other reflector devices 225a, 225b, 225c, 225d, is primarily determined by its angles of incidence and azimuth at which it is incident on the screen 210. Thus, the brightness or intensity of incoming light actually reaching the respective light-sensitive detection devices 221 may be dependent upon, e.g. proportional to, the said angles of incidence and azimuth thereof.

A comparator portion of the processing part of the control system 290 is then used to compare the said baseline brightness/intensity of each reference light beam and an enhanced respective brightness/intensity of the combined beam at each respective light-sensitive device 221, and the resulting calculated differences used to generate an output signal to the control means of the apparatus which is a function of the overall direction of incidence of the incoming light on the detecting means. That output of the processing part of the control means 290 is then fed to the control means as before in a correlated manner to provide an optimised level of brightness or intensity required by the backlight 212 in order to provide optimum visibility or viewability of information displayed on the screen 210 of the apparatus.

If desired or necessary an upper covering layer or sheet 280 of transparent glass or plastics material may be overlaid over the arrangement in order to protect its operation and the passage of light rays therearound.

It is to be understood that the reference beams of light generated by the light-emitting devices 223a may be modulated in brightness of intensity in some embodiments so as to enable a distinction to be made between the intensity if the reference beams and that of ambient light incident on the display 210.

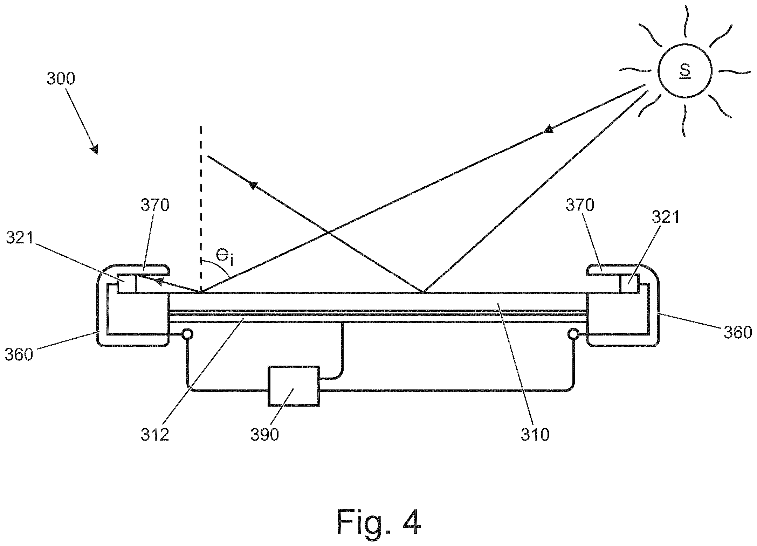

Figure 4 shows a third embodiment of display apparatus 300 according to the invention. Features of this embodiment that correspond in form and/or function to those of the first embodiment of Figures 1 and 2 are referred to by the same reference numerals but incremented by 200.

In this example a collimator device is employed, instead of a waveguide, in order to channel and selectively transmit rays of the incoming incident light onto or into the respective light-sensitive detection devices 321 positioned around the screen 310 and backlight 312.

In the illustrated exemplary arrangement at least one pair of light pipes or light channels 370, which may be provided with internal light-reflective or light-diffusive surfaces (which surfaces are well-known per se in the field of optics), are formed by or in upper recessed portions of the frame or bezel 360 in which the screen 310 is mounted. Mounted within each respective light pipe or channel 370 is a respective light-sensitive detection device 321, e.g. a photodiode or phototransistor (as in the other embodiments above), such that substantially only collimated light that enters the respective light pipe or channel 370 may reach the respective detection device 321 located at the innermost end or base thereof.

As shown in Figure 4, the respective light pipes or channels 370 are oriented such that they are directed generally parallel to the general plane of the screen 310, so that predominantly only incoming light incident on the screen at relatively high angles of incidence reaches the respective detection devices 321. This may enhance the sensitivity of the apparatus in particular for detecting differences in output signals from the respective light-sensitive detection devices 321 when the subject incident light rays are at relatively high angles of incidence with respect to the screen 310.

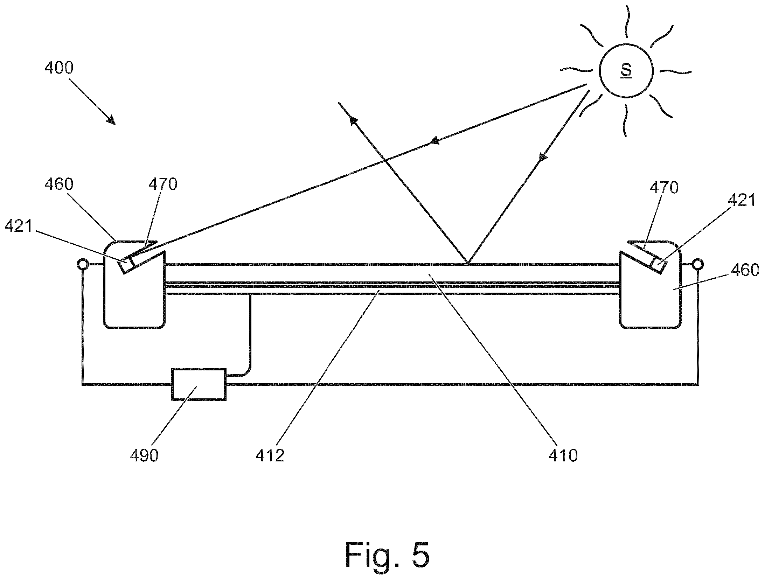

Figure 5 shows a fourth embodiment of display apparatus 400 according to the invention. Features of this embodiment that correspond in form and/or function to those of the first embodiment of Figures 1 and 2 are referred to by the same reference numerals but incremented by 300.

This illustrated embodiment corresponds closely to that of Figure 4, but here the respective light pipes or channels 470 are oriented such that they are directed generally at an upward angle, e.g. of from about 5 or 10 or 15 or 20 degrees up to about 30 or 40 or 50 or 60 or even up to about 70 degrees, relative to the general plane of the screen 410. As a result, predominantly only incoming light incident on the screen at relatively low angles of incidence reaches the respective detection devices 421. This may enhance the sensitivity of the apparatus in particular for detecting differences in output signals from the respective light-sensitive detection devices 421 when the subject incident light rays are at relatively low angles of incidence with respect to the screen 410.

It is to be understood that the above description of some embodiments and aspects of the invention has been by way of non-limiting examples only, and various modifications may be made from what has been specifically described and illustrated whilst remaining within the scope of the invention as defined in the appended claims.

Throughout the description and claims of this specification, the words "comprise" and "contain" and variations of those words, for example "comprising" and "comprises", mean "including but not limited to", and are not intended to (and do not) exclude other moieties, additives, components, integers or steps.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith.

## Claims

1. A display apparatus (100, 200, 300) comprising a screen (110, 210, 310) for displaying information to a viewer and illumination means (112, 212, 312) for illuminating the screen (110, 210, 310), the apparatus (100, 200, 300) further comprising:
directional detecting means for detecting electromagnetic radiation incident on the apparatus (100); and
control means (190, 290, 390) configured to control the illumination means (112, 212, 312) in dependence on the detected direction of incidence of the electromagnetic radiation;
wherein the directional detecting means comprises a plurality of electromagnetic radiation-sensing means (121, 221, 321), disposed around the apparatus (100, 200, 300) or the screen (110, 210, 310) thereof;
and wherein the directional detecting means is adapted to ascertain the direction from which the electromagnetic radiation is incident on the detecting means by at least two directional parameters of the incident electromagnetic radiation, the said at least two directional parameters including (i) an angle of incidence between the incident electromagnetic radiation rays and a normal to the detecting means or a reference plane containing the detecting means, and (ii) an azimuth angle of the incident electromagnetic radiation rays relative to a reference axis defined by the detecting means or the screen (110); and
wherein the screen (110, 210, 310) is a bidirectionally or multidirectionally viewable screen, in which different images, or given images of different brightnesses or intensities, are generated for viewing from at least two different viewing directions or angles relative to the screen (110, 210, 310), and the control means (190, 290, 390) is configured such that the brightness or intensity of the information displayed along the at least two different viewing directions is determined and controlled independently in dependence on the detected direction of incidence of the electromagnetic radiation.

2. A display apparatus (100, 200, 300) according to claim 1, wherein the directional detecting means further comprises one or more electromagnetic radiation-directing means in association with the or respective electromagnetic radiation-sensing means (121, 221, 321) for directing at least a proportion of incoming electromagnetic radiation so as to be incident upon it or them; optionally
the electromagnetic radiation-directing means include one or more waveguide devices (115) or collimator devices (370); and/or
each electromagnetic radiation-directing means is constructed and arranged such that incoming electromagnetic radiation is incident upon different ones of the electromagnetic radiation-sensing means (121, 221, 321) with different brightnesses or intensities, whereby different ones of the electromagnetic radiation-sensing means may experience different brightnesses or intensities of incident electromagnetic radiation emanating from a given electromagnetic radiation source, and resulting differentials as between sensed electromagnetic radiation brightnesses or intensities at different ones of the electromagnetic radiation-sensing means (121, 221, 321) result in corresponding differentials as between signal outputs of the respective electromagnetic radiation-sensing means (121, 221, 321); optionally the display apparatus (100, 200, 300) further comprises processing means for comparing differentials in signal outputs as between different electromagnetic radiation-sensing means (121, 221, 321), and determining or calculating on the basis thereof an overall direction of incidence of incoming electromagnetic radiation.

3. A display apparatus (100, 200, 300) according to claim 1 or claim 2, wherein the directional detecting means comprises a plurality of electromagnetic radiation-directing means each associated with a respective one of the plurality of electromagnetic radiation-sensing means (121, 221, 321), for directing at least a proportion of incoming electromagnetic radiation so as to be incident on different ones of the plurality of electromagnetic radiation-sensing means (121, 221, 321) with respective different brightnesses or intensities; or, wherein the directional detecting means comprises one or more electromagnetic radiation-directing means being, or each being, associated with two or more electromagnetic radiation-sensing means (121, 221, 321), for directing at least a proportion of incoming electromagnetic radiation so as to be incident on different ones of the two or more electromagnetic radiation-sensing means (121, 221, 321) with respective different brightnesses or intensities.

4. A display apparatus (100, 200, 300) according to any one of claims 1 to 3, wherein the directional detecting means further comprises processing means for receiving output signals from each of the plurality of electromagnetic radiation-sensing means (121, 221, 321), comparing the received output signals, and providing an output to the control means (190, 290, 390) of the apparatus (100, 200, 300) which is a function of the overall direction of incidence of the electromagnetic radiation on the detecting means; optionally the output of the processing means that is fed to the control means 190, 290, 390) is correlated in a predetermined manner to an optimised level of brightness or intensity required by the illumination means (112, 212, 312), such that it may be illuminated under control of the control means (190, 290, 390) for optimum visibility or viewability of the screen (110, 210, 310) upon exposure to the incoming electromagnetic radiation.

5. A display apparatus (100, 200, 300) according to claim 2, wherein the directional detecting means comprises a plurality of electromagnetic radiation-sensitive devices arranged around at least one waveguide element or device which channels, transmits or propagates electromagnetic radiation incident thereupon into or onto the electromagnetic radiation-sensitive devices therearound.

6. A display apparatus (100, 200, 300) according to claim 5, wherein the at least one waveguide element or device channels, transmits or propagates electromagnetic radiation incident thereupon into or onto respective ones of the electromagnetic radiation-sensitive devices with respectively different brightnesses or intensities dependent on the relative position of each respective electromagnetic radiation-sensitive device with respect to the direction of incidence of the incoming electromagnetic radiation upon the at least one waveguide element or device; optionally the plurality of electromagnetic radiation-sensitive devices are located and configured symmetrically and/or equi-angularly around the periphery or perimeter of, or at or adjacent a lateral edge of, the at least one waveguide element or device, whereby electromagnetic radiation channelled, transmitted or propagated through the waveguide element or device is directed onto or into each respective electromagnetic radiation-sensitive device with a brightness or intensity which is dependent on the azimuth angular positioning of the respective electromagnetic radiation-sensitive device relative to the direction of incidence of the incident incoming electromagnetic radiation.

7. A display apparatus (200) according to claim 5 or claim 6, wherein the at least one waveguide element or device comprises an arrangement of one or more, optionally a plurality of, reflecting means (225), for chanelling or directing by reflection incident incoming electromagnetic radiation onto or into the respective electromagnetic radiation-sensitive devices positioned therearound.

8. A display apparatus (200) according to claim 7, wherein:
a plurality of electromagnetic radiation-sensitive devices each has associated with it a respective one of a plurality of reference electromagnetic radiation-emitting devices (223a) distal therefrom and for transmitting a reference electromagnetic radiation beam of a baseline brightness or intensity across and/or adjacent a viewing face of the display screen (210) and onto or into the respective electromagnetic radiation-sensitive device via one or more of the reflecting means (225),
also transmitted onto or into the said respective electromagnetic radiation-sensitive device at least partially by the or the respective reflecting means (225) is incoming incident electromagnetic radiation whose own brightness or intensity is dependent on the azimuth angular positioning of the respective electromagnetic radiation-sensitive device relative to the direction of incidence of the incident incoming electromagnetic radiation, the incoming incident light combining with the reference beam to create a combined beam of enhanced brightness or intensity in comparison with that of the reference beam alone, and
the apparatus further comprises comparator means for calculating a difference between the said baseline brightness/intensity of each reference electromagnetic radiation beam and a respective brightness or intensity of the combined beam at each respective electromagnetic radiation-sensitive device, and generating a respective signal output which is dependent upon the said baseline-to-incident incoming brightness/intensity difference at that respective electromagnetic radiation-sensitive device,
wherein the signal outputs from the various electromagnetic radiation-sensitive devices are then processed by processing means which receives the signal outputs from each of the electromagnetic radiation-sensitive devices, compares the received output signals, and provides an output to the control means of the apparatus which is a function of the overall direction of incidence of the electromagnetic radiation on the detecting means.

9. A display apparatus (300) according to claim 2, wherein the directional detecting means comprises a plurality of electromagnetic radiation-sensitive devices each associated with a respective, or a respective portion of, one or more collimating devices (370) for channelling incident electromagnetic radiation onto or into the, or each respective, electromagnetic radiation-sensitive device.

10. A display apparatus (100, 200, 300) according to any preceding claim, wherein the control means (190, 290, 390) includes a control input for receiving an output signal generated by a processing means of the detecting means, which has measured the overall direction of incidence of incoming electromagnetic radiation on the apparatus, which output signal from the detecting means is correlated to a predetermined level of illumination of the illumination means (112, 212, 312) for achieving optimum visibility or viewability of the screen to be illuminated thereby, and a control output for controlling the illumination means (112, 212, 312) in a correlated manner in accordance with the inputted detecting means' output signal.

11. A vehicle including a display apparatus (100, 200, 300) according to any one of claims 1 to 10.

12. A method of displaying information on a display apparatus, the apparatus including illumination means for illuminating a screen via which information is visibly displayable to a viewer, wherein the method comprises:
detecting electromagnetic radiation incident on the apparatus using a plurality of electromagnetic radiation-sensing means, disposed around the apparatus or the screen thereof; and
controlling the illumination means in dependence on the incident electromagnetic radiation detected;
wherein the detecting of electromagnetic radiation incident on the apparatus comprises detecting a direction from which the electromagnetic radiation is incident thereon by at least two directional parameters of the incident electromagnetic radiation, the said at least two directional parameters including (i) an angle of incidence between the incident electromagnetic radiation rays and a normal to the detecting means or a reference plane containing the detecting means, and (ii) an azimuth angle of the incident electromagnetic radiation rays relative to a reference axis defined by the detecting means or the screen,
and the controlling of the illumination means comprises controlling the illumination means in dependence on the detected direction of incidence of the electromagnetic radiation,
wherein the screen is a bidirectionally or multidirectionally viewable screen, in which different images, or given images of different brightnesses or intensities, are generated for viewing from at least two different viewing directions or angles relative to the screen, and the method comprises determining and controlling the brightness or intensity of the information displayed along the at least two different viewing directions independently in dependence on the detected direction of incidence of the electromagnetic radiation.

13. A system for controlling illumination of a screen (110, 210, 310) of a display apparatus (100, 200, 300), the apparatus (100, 200, 300) including illumination means (112, 212, 312) for illuminating a screen (110, 210, 310) via which information is visibly displayable to a viewer, wherein the system comprises:
detecting means for detecting electromagnetic radiation incident on the apparatus (100, 200, 300); and
control means (190, 290, 390) for controlling the illumination means (112, 212, 312) in dependence on the incident electromagnetic radiation detected by the detecting means;
wherein the detecting means is a directional detecting means comprising a plurality of electromagnetic radiation-sensing means (121, 221, 321), disposed around the apparatus (100, 200, 300) or the screen (110, 210, 310) thereof, for detecting a direction from which the electromagnetic radiation is incident thereon by at least two directional parameters of the incident electromagnetic radiation, the said at least two directional parameters including (i) an angle of incidence between the incident electromagnetic radiation rays and a normal to the detecting means or a reference plane containing the detecting means, and (ii) an azimuth angle of the incident electromagnetic radiation rays relative to a reference axis defined by the detecting means or the screen, and the control means is operable to control the illumination means in dependence on the detected direction of incidence of the electromagnetic radiation; and
wherein the screen (110, 210, 310) is a bidirectionally or multidirectionally viewable screen, in which different images, or given images of different brightnesses or intensities, are generated for viewing from at least two different viewing directions or angles relative to the screen (110, 210, 310), and the control means (190, 290, 390) is configured such that the brightness or intensity of the information displayed along the at least two different viewing directions is determined and controlled independently in dependence on the detected direction of incidence of the electromagnetic radiation.

14. A method of controlling illumination of a screen of a display apparatus, the apparatus including illumination means for illuminating the screen via which information is visibly displayable to a viewer, wherein the method comprises:
detecting electromagnetic radiation incident on the apparatus using a plurality of electromagnetic radiation-sensing means, disposed around the apparatus or the screen thereof; and
controlling the illumination means in dependence on the incident electromagnetic radiation detected;
wherein the detecting of electromagnetic radiation incident on the apparatus comprises detecting a direction from which the electromagnetic radiation is incident thereon by at least two directional parameters of the incident electromagnetic radiation, the said at least two directional parameters including (i) an angle of incidence between the incident electromagnetic radiation rays and a normal to the detecting means or a reference plane containing the detecting means, and (ii) an azimuth angle of the incident electromagnetic radiation rays relative to a reference axis defined by the detecting means or the screen, and
the controlling of the illumination means comprises controlling the illumination means in dependence on the detected direction of incidence of the electromagnetic radiation,
wherein the screen is a bidirectionally or multidirectionally viewable screen, in which different images, or given images of different brightnesses or intensities, are generated for viewing from at least two different viewing directions or angles relative to the screen, and the method comprises determining and controlling the brightness or intensity of the information displayed along the at least two different viewing directions independently in dependence on the detected direction of incidence of the electromagnetic radiation.

## Patentansprüche

1. Anzeigevorrichtung (100, 200, 300), umfassend einen Bildschirm (110, 210, 310) zum Anzeigen von Informationen für einen Betrachter und Beleuchtungsmittel (112, 212, 312) zum Beleuchten des Bildschirms (110, 210, 310), wobei die Vorrichtung (100, 200, 300) ferner umfasst:
Richtungserkennungsmittel zum Erkennen von auf die Vorrichtung (100) einfallender elektromagnetischer Strahlung; und
Steuerungsmittel (190, 290, 390), die so konfiguriert sind, dass sie die Beleuchtungsmittel (112, 212, 312) in Abhängigkeit von der erkannten Einfallsrichtung der elektromagnetischen Strahlung steuern;
wobei das Richtungserkennungsmittel eine Vielzahl von Erfassungsmitteln für elektromagnetischen Strahlung (121, 221, 321) umfasst, die um die Vorrichtung (100, 200, 300) oder deren Bildschirm (110, 210, 310) herum angeordnet sind;
und wobei das Richtungserkennungsmittel so ausgelegt ist, dass es die Richtung, aus der die elektromagnetische Strahlung auf das Erkennungsmittel einfällt, durch mindestens zwei Richtungsparameter der einfallenden elektromagnetischen Strahlung ermittelt, wobei die mindestens zwei Richtungsparameter (i) einen Einfallswinkel zwischen den einfallenden Strahlen der elektromagnetischen Strahlung und einer Normalen zu dem Erkennungsmittel oder einer das Erkennungsmittel enthaltenden Referenzebene, und (ii) einen Azimutwinkel der einfallenden Strahlen der elektromagnetischen Strahlung relativ zu einer Referenzachse, die durch das Erkennungsmittel oder den Bildschirm (110) definiert ist, einschließen; und
wobei der Bildschirm (110, 210, 310) ein bidirektional oder multidirektional betrachtbarer Bildschirm ist, bei dem unterschiedliche Bilder, oder gegebene Bilder mit unterschiedlichen Helligkeiten oder Intensitäten, für die Betrachtung aus mindestens zwei verschiedenen Betrachtungsrichtungen oder -winkeln relativ zum Bildschirm (110, 210, 310) erzeugt werden, und die Steuerungsmittel (190, 290, 390) so konfiguriert sind, dass die Helligkeit oder Intensität der entlang der mindestens zwei unterschiedlichen Betrachtungsrichtungen angezeigten Informationen in Abhängigkeit von der erkannten Einfallsrichtung der elektromagnetischen Strahlung unabhängig bestimmt und gesteuert wird.

2. Anzeigevorrichtung (100, 200, 300) nach Anspruch 1, wobei das Richtungserkennungsmittel ferner ein oder mehrere Lenkungsmittel für elektromagnetische Strahlung in Verbindung mit dem oder den jeweiligen Erfassungsmitteln für elektromagnetisch Strahlung (121, 221, 321) umfasst, um mindestens einen Teil der eintreffenden elektromagnetischen Strahlung so zu lenken, dass sie auf dieses oder diese einfällt; optional
schließen die Lenkungsmittel für elektromagnetische Strahlung eine oder mehrere Hohlleitervorrichtungen (115) oder Kollimatorvorrichtungen (370) ein; und/oder
ist jedes Lenkungsmittel für elektromagnetische Strahlung so konstruiert und angeordnet, dass eintreffende elektromagnetische Strahlung auf verschiedene der Erfassungsmittel für elektromagnetische Strahlung (121, 221, 321) mit unterschiedlichen Helligkeiten oder Intensitäten einfällt, wodurch verschiedene der Erfassungsmittel für elektromagnetische Strahlung unterschiedliche Helligkeiten oder Intensitäten der einfallenden elektromagnetischen Strahlung erfahren können, die von einer gegebenen elektromagnetischen Strahlungsquelle ausgehen, und sich daraus ergebende Differenzen zwischen den erfassten Helligkeiten oder Intensitäten der elektromagnetischen Strahlung an verschiedenen der Erfassungsmitteln für elektromagnetische Strahlung (121, 221, 321) zu entsprechenden Differenzen zwischen den Signalausgaben der jeweiligen Erfassungsmittel für elektromagnetische Strahlung (121, 221, 321) führen; optional umfasst die Anzeigevorrichtung (100, 200, 300) ferner Verarbeitungsmittel zum Vergleichen von Differenzen in Signalausgaben zwischen verschiedenen Erfassungsmitteln für elektromagnetische Strahlung (121, 221, 321) und zum Bestimmen oder Berechnen einer Gesamteinfallsrichtung der eintreffenden elektromagnetischen Strahlung auf der Grundlage dieser.

3. Anzeigevorrichtung (100, 200, 300) nach Anspruch 1 oder 2, wobei das Richtungserkennungsmittel eine Vielzahl von Lenkungsmitteln für elektromagnetische Strahlung umfasst, die jeweils einem jeweiligen der Vielzahl von Erfassungsmitteln für elektromagnetische Strahlung (121, 221, 321) zugeordnet sind, um mindestens einen Teil der eintreffenden elektromagnetischen Strahlung so zu lenken, dass sie mit jeweils unterschiedlichen Helligkeiten oder Intensitäten auf verschiedene der Vielzahl von Erfassungsmitteln für elektromagnetische Strahlung (121, 221, 321) einfällt; oder, wobei das Richtungserkennungsmittel ein oder mehrere Lenkungsmittel für elektromagnetische Strahlung umfasst, die zwei oder mehr Erfassungsmitteln für elektromagnetische Strahlung (121, 221, 321) zugeordnet oder jeweils zugeordnet sind, um mindestens einen Teil der eintreffenden elektromagnetischen Strahlung so zu lenken, dass sie mit jeweils unterschiedlichen Helligkeiten oder Intensitäten auf verschiedene der zwei oder mehr Erfassungsmitteln für elektromagnetische Strahlung (121, 221, 321) einfällt.

4. Anzeigevorrichtung (100, 200, 300) nach einem der Ansprüche 1 bis 3, wobei das Richtungserkennungsmittel ferner Verarbeitungsmittel zum Empfangen von Ausgangssignalen von jedem der Vielzahl von Erfassungsmitteln für elektromagnetische Strahlung (121, 221, 321), zum Vergleichen der empfangenen Ausgangssignale und zum Bereitstellen einer Ausgabe an die Steuerungsmittel (190, 290, 390) der Vorrichtung (100, 200, 300), die eine Funktion der Gesamteinfallsrichtung der elektromagnetischen Strahlung auf die Erkennungsmittel ist, umfasst; optional wird die Ausgabe des Verarbeitungsmittels, die an die Steuerungsmittel (190, 290, 390) weitergeleitet wird, in einer vorgegebenen Weise mit einem optimierten Helligkeits- oder Intensitätsniveau korreliert, das von den Beleuchtungsmitteln (112, 212, 312) benötigt wird, so dass diese unter Steuerung der Steuerungsmittel (190, 290, 390) für eine optimale Sichtbarkeit oder Betrachtbarkeit des Bildschirms (110, 210, 310) bei Einwirkung der eintreffenden elektromagnetischen Strahlung beleuchtet werden können.

5. Anzeigevorrichtung (100, 200, 300) nach Anspruch 2, wobei die Richtungserkennungsmittel eine Vielzahl von gegenüber elektromagnetischer Strahlung empfindlichen Vorrichtungen umfasst, die um mindestens ein Hohlleiterelement oder eine Hohlleitervorrichtung herum angeordnet sind, das bzw. die darauf einfallende elektromagnetische Strahlung in die oder auf die gegenüber elektromagnetischer Strahlung empfindlichen Vorrichtungen leitet, überträgt oder ausbreitet.

6. Anzeigevorrichtung (100, 200, 300) nach Anspruch 5, wobei das mindestens eine Hohlleiterelement oder die mindestens eine Hohlleitervorrichtung darauf einfallende elektromagnetische Strahlung in oder auf jeweilige der gegenüber elektromagnetischer Strahlung empfindlichen Vorrichtungen mit jeweils unterschiedlichen Helligkeiten oder Intensitäten leitet, überträgt oder ausbreitet, die von der relativen Position jeder einzelnen gegenüber elektromagnetischer Strahlung empfindlichen Vorrichtung in Bezug auf die Einfallsrichtung der auf das mindestens eine Hohlleiterelement oder die mindestens eine Hohlleitervorrichtung eintreffenden elektromagnetischen Strahlung abhängen; optional ist die Vielzahl von gegenüber elektromagnetischer Strahlung empfindlichen Vorrichtungen symmetrisch und/oder gleichwinklig um den Umfang oder die Begrenzung des mindestens einen Hohlleiterelements oder der mindestens einen Hohlleitervorrichtung oder an oder angrenzend an eine Seitenkante davon angeordnet und konfiguriert, wodurch die durch das Hohlleiterelement oder die Hohlleitervorrichtung geleitete, übertragene oder ausgebreitete elektromagnetische Strahlung mit einer Helligkeit oder Intensität auf oder in die jeweilige gegenüber elektromagnetischer Strahlung empfindlichen Vorrichtung gerichtet wird, die von der Azimutwinkelposition der jeweiligen gegenüber elektromagnetischer Strahlung empfindlichen Vorrichtung relativ zur Einfallsrichtung der eintreffenden elektromagnetischen Strahlung abhängt.

7. Anzeigevorrichtung (200) nach Anspruch 5 oder 6, wobei das mindestens ein Hohlleiterelement oder die mindestens eine Hohlleitervorrichtung eine Anordnung aus einem oder mehreren, optional einer Vielzahl von, Reflexionsmitteln (225) umfasst, um einfallende eintreffende elektromagnetische Strahlung durch Reflexion auf oder in die jeweiligen gegenüber elektromagnetischer Strahlung empfindlichen Vorrichtungen, die darum herum positioniert sind, zu leiten oder zu lenken.

8. Anzeigevorrichtung (200) nach Anspruch 7, wobei:
einer Vielzahl von gegenüber elektromagnetischer Strahlung empfindlichen Vorrichtungen, denen jeweils eine jeweilige einer Vielzahl von elektromagnetische Strahlung emittierenden Referenzvorrichtungen (223a) zugeordnet ist, die distal davon angeordnet sind und zum Übertragen eines Referenzstrahls elektromagnetischer Strahlung mit einer Grundhelligkeit oder -intensität über und/oder angrenzend an eine Betrachtungsfläche des Bildschirms (210) und auf oder in die jeweilige gegenüber elektromagnetischer Strahlung empfindlichen Vorrichtung über eine oder mehrere der Reflexionsmittel (225),
was auch zumindest teilweise durch das oder das jeweilige Reflexionsmittel (225) auf die oder in die jeweilige gegenüber elektromagnetischer Strahlung empfindlichen Vorrichtung übertragen wird, ist eintreffende einfallende elektromagnetische Strahlung, deren eigene Helligkeit oder Intensität von der Azimutwinkelposition der jeweiligen gegenüber elektromagnetischer Strahlung empfindlichen Vorrichtung relativ zur Einfallsrichtung der eintreffenden einfallenden elektromagnetischen Strahlung abhängig ist, wobei das eintreffende einfallende Licht mit dem Referenzstrahl kombiniert wird, um einen kombinierten Strahl mit einer im Vergleich zu dem des Referenzstrahls allein erhöhten Helligkeit oder Intensität zu erzeugen, und
die Vorrichtung umfasst ferner ein Vergleichsmittel zum Berechnen einer Differenz zwischen der Grundhelligkeit/-intensität jedes Referenzstrahls elektromagnetischer Strahlung und einer jeweiligen Helligkeit oder Intensität des kombinierten Strahls an jeder jeweiligen gegenüber elektromagnetischer Strahlung empfindlichen Vorrichtung, und zum Erzeugen eines jeweiligen Signalausgangs, der von der Differenz zwischen der Grundhelligkeit/-intensität und der eintreffenden einfallenden Helligkeit/Intensität an dieser jeweiligen gegenüber elektromagnetischer Strahlung empfindlichen Vorrichtung abhängig ist,
wobei die Signalausgaben der verschiedenen gegenüber elektromagnetischer Strahlung empfindlichen Vorrichtungen dann von Verarbeitungsmitteln verarbeitet werden, welche die Signalausgaben von jeder der gegenüber elektromagnetischer Strahlung empfindlichen Vorrichtungen empfangen, die empfangenen Ausgangssignale vergleichen und eine Ausgabe an die Steuerungsmittel der Vorrichtung bereitstellen, die eine Funktion der Gesamteinfallsrichtung der elektromagnetischen Strahlung auf die Erkennungsmittel ist.

9. Anzeigevorrichtung (300) nach Anspruch 2, wobei das Richtungserkennungsmittel eine Vielzahl von gegenüber elektromagnetischer Strahlung empfindlichen Vorrichtungen umfasst, die jeweils einer entsprechenden oder einem entsprechenden Teil einer oder mehrerer Kollimationsvorrichtungen (370) zugeordnet sind, um einfallende elektromagnetische Strahlung auf oder in die oder jede jeweilige gegenüber elektromagnetischer Strahlung empfindlichen Vorrichtung zu lenken.

10. Anzeigevorrichtung (100, 200, 300) nach einem der vorhergehenden Ansprüche, wobei das Steuerungsmittel (190, 290, 390) einen Steuereingang zum Empfangen eines Ausgangssignals, das von einem Verarbeitungsmittel des Erkennungsmittels erzeugt wird, das die Gesamteinfallsrichtung der auf die Vorrichtung eintreffenden elektromagnetischen Strahlung gemessen hat, wobei das Ausgangssignal des Erkennungsmittels mit einem vorbestimmten Beleuchtungsniveau der Beleuchtungsmittel (112, 212, 312) korreliert ist, um eine optimale Sichtbarkeit oder Betrachtbarkeit des Bildschirms zu erreichen, der dadurch beleuchtet werden soll, und einen Steuerausgang zum Steuern der Beleuchtungsmittel (112, 212, 312) in einer korrelierten Weise gemäß dem eingegebenen Ausgangssignal der Erkennungsmittel, einschließt.

11. Fahrzeug, das eine Anzeigevorrichtung (100, 200, 300) einschließt, nach einem der Ansprüche 1 bis 10.

12. Verfahren zum Anzeigen von Informationen auf einer Anzeigevorrichtung, wobei die Vorrichtung Beleuchtungsmittel zum Beleuchten eines Bildschirms einschließt, über den Informationen für einen Betrachter sichtbar angezeigt werden können, wobei das Verfahren umfasst:
Erkennen der auf die Vorrichtung einfallenden elektromagnetischen Strahlung unter Verwendung einer Vielzahl von Erfassungsmitteln für elektromagnetische Strahlung, die um die Vorrichtung oder deren Bildschirm herum angeordnet sind; und
Steuern der Beleuchtungsmittel in Abhängigkeit von der erkannten einfallenden elektromagnetischen Strahlung;
wobei das Erkennen von auf die Vorrichtung einfallender elektromagnetischer Strahlung das Erkennen einer Richtung, aus der die elektromagnetische Strahlung darauf einfällt, durch mindestens zwei Richtungsparameter der einfallenden elektromagnetischen Strahlung umfasst, wobei die mindestens zwei Richtungsparameter (i) einen Einfallswinkel zwischen den einfallenden Strahlen der elektromagnetischen Strahlung und einer Normalen zu den Erkennungsmitteln oder einer die Erkennungsmittel enthaltenden Referenzebene, und (ii) einen Azimutwinkel der einfallenden Strahlen der elektromagnetischen Strahlung relativ zu einer Referenzachse, die durch die Erkennungsmittel oder den Bildschirm definiert ist, einschließen;
und das Steuern der Beleuchtungsmittel das Steuern der Beleuchtungsmittel in Abhängigkeit von der erkannten Einfallsrichtung der elektromagnetischen Strahlung umfasst,
wobei der Bildschirm ein bidirektional oder multidirektional betrachtbarer Bildschirm ist, bei dem unterschiedliche Bilder, oder gegebene Bilder mit unterschiedlichen Helligkeiten oder Intensitäten, für die Betrachtung aus mindestens zwei verschiedenen Betrachtungsrichtungen oder -winkeln relativ zum Bildschirm erzeugt werden, und das Verfahren das unabhängige Bestimmen und Steuern der Helligkeit oder Intensität der angezeigten Informationen entlang der mindestens zwei verschiedenen Betrachtungsrichtungen in Abhängigkeit von der erkannten Einfallsrichtung der elektromagnetischen Strahlung umfasst.

13. System zum Steuern der Beleuchtung eines Bildschirms (110, 210, 310) einer Anzeigevorrichtung (100, 200, 300), wobei die Vorrichtung (100, 200, 300) Beleuchtungsmittel (112, 212, 312) zum Beleuchten eines Bildschirms (110, 210, 310) einschließt, über den Informationen für einen Betrachter sichtbar angezeigt werden können, wobei das System umfasst:
Erkennungsmittel zum Erkennen von auf die Vorrichtung (100, 200, 300) einfallender elektromagnetischer Strahlung; und
Steuerungsmittel (190, 290, 390) zum Steuern der Beleuchtungsmittel (112, 212, 312) in Abhängigkeit von der einfallenden elektromagnetischen Strahlung, die von den Erkennungsmitteln erkannt wird;
wobei das Erkennungsmittel ein Richtungserkennungsmittel ist, umfassend eine Vielzahl von Erfassungsmitteln für elektromagnetische Strahlung (121, 221, 321), die um die Vorrichtung (100, 200, 300) oder deren Bildschirm (110, 210, 310) herum angeordnet sind, um eine Richtung zu erkennen, aus der die elektromagnetische Strahlung darauf einfällt, durch mindestens zwei Richtungsparameter der einfallenden elektromagnetischen Strahlung, wobei die mindestens zwei Richtungsparameter (i) einen Einfallswinkel zwischen den einfallenden Strahlen der elektromagnetischen Strahlung und einer Normalen zu den Erkennungsmitteln oder einer die Erkennungsmittel enthaltenden Referenzebene, und (ii) einen Azimutwinkel der einfallenden Strahlen der elektromagnetischen Strahlung relativ zu einer durch die Erkennungsmittel oder den Bildschirm definierten Referenzachse einschließen, und wobei das Steuerungsmittel so betreibbar ist, dass es die Beleuchtungsmittel in Abhängigkeit von der erkannten Einfallsrichtung der elektromagnetischen Strahlung steuert; und
wobei der Bildschirm (110, 210, 310) ein bidirektional oder multidirektional betrachtbarer Bildschirm ist, bei dem unterschiedliche Bilder, oder gegebene Bilder mit unterschiedlichen Helligkeiten oder Intensitäten, für die Betrachtung aus mindestens zwei verschiedenen Betrachtungsrichtungen oder -winkeln relativ zum Bildschirm (110, 210, 310) erzeugt werden, und die Steuerungsmittel (190, 290, 390) so konfiguriert sind, dass die Helligkeit oder Intensität der entlang der mindestens zwei unterschiedlichen Betrachtungsrichtungen angezeigten Informationen in Abhängigkeit von der erkannten Einfallsrichtung der elektromagnetischen Strahlung unabhängig bestimmt und gesteuert wird.

14. Verfahren zum Steuern der Beleuchtung eines Bildschirms einer Anzeigevorrichtung, wobei die Vorrichtung Beleuchtungsmittel zum Beleuchten des Bildschirms einschließt, über den Informationen für einen Betrachter sichtbar angezeigt werden können, wobei das Verfahren umfasst:
Erkennen der auf die Vorrichtung einfallenden elektromagnetischen Strahlung unter Verwendung einer Vielzahl von Erfassungsmitteln für elektromagnetische Strahlung, die um die Vorrichtung oder deren Bildschirm herum angeordnet sind; und
Steuern der Beleuchtungsmittel in Abhängigkeit von der erkannten einfallenden elektromagnetischen Strahlung;
wobei das Erkennen von auf die Vorrichtung einfallender elektromagnetischer Strahlung das Erkennen einer Richtung, aus der die elektromagnetische Strahlung darauf einfällt, durch mindestens zwei Richtungsparameter der einfallenden elektromagnetischen Strahlung umfasst, wobei die mindestens zwei Richtungsparameter (i) einen Einfallswinkel zwischen den einfallenden Strahlen der elektromagnetischen Strahlung und einer Normalen zu den Erkennungsmitteln oder einer die Erkennungsmittel enthaltenden Referenzebene, und (ii) einen Azimutwinkel der einfallenden Strahlen der elektromagnetischen Strahlung relativ zu einer Referenzachse, die durch die Erkennungsmittel oder den Bildschirm definiert ist, einschließen; und
das Steuern der Beleuchtungsmittel das Steuern der Beleuchtungsmittel in Abhängigkeit von der erkannten Einfallsrichtung der elektromagnetischen Strahlung umfasst,
wobei der Bildschirm ein bidirektional oder multidirektional betrachtbarer Bildschirm ist, bei dem unterschiedliche Bilder, oder gegebene Bilder mit unterschiedlichen Helligkeiten oder Intensitäten, für die Betrachtung aus mindestens zwei verschiedenen Betrachtungsrichtungen oder -winkeln relativ zum Bildschirm erzeugt werden, und das Verfahren das unabhängige Bestimmen und Steuern der Helligkeit oder Intensität der angezeigten Informationen entlang der mindestens zwei verschiedenen Betrachtungsrichtungen in Abhängigkeit von der erkannten Einfallsrichtung der elektromagnetischen Strahlung umfasst.

## Revendications

1. Appareil d'affichage (100, 200, 300) comprenant un écran (110, 210, 310) permettant d'afficher des informations à un visualisateur et des moyens d'éclairage (112, 212, 312) permettant d'éclairer l'écran (110, 210, 310), l'appareil (100, 200, 300) comprenant en outre :
un moyen de détection directionnel permettant de détecter un rayonnement électromagnétique incident sur l'appareil (100) ; et
des moyens de commande (190, 290, 390) configurés pour commander les moyens d'éclairage (112, 212, 312) en dépendance avec la direction d'incidence détectée du rayonnement électromagnétique ;
dans lequel le moyen de détection directionnel comprend une pluralité de moyens de captage de rayonnement électromagnétique (121, 221, 321), disposés autour de l'appareil (100, 200, 300) ou de l'écran (110, 210, 310) de celui-ci ;
et dans lequel le moyen de détection directionnel est adapté pour définir la direction à partir de laquelle le rayonnement électromagnétique est incident sur le moyen de détection par au moins deux paramètres directionnels du rayonnement électromagnétique incident, lesdits au moins deux paramètres directionnels comportant (i) un angle d'incidence entre les rayons de rayonnement électromagnétique incident et une normale au moyen de détection ou un plan de référence contenant le moyen de détection, et (ii) un angle d'azimut des rayons de rayonnement électromagnétique incident par rapport à un axe de référence défini par le moyen de détection ou par l'écran (110) ; et
dans lequel l'écran (110, 210, 310) est un écran visualisable de manière bidirectionnelle ou multidirectionnelle, où différentes images, ou des images données de différentes luminosités ou intensités, sont générées pour être visualisées à partir d'au moins deux directions ou angles de visualisation différents par rapport à l'écran (110, 210, 310), et les moyens de commande (190, 290, 390) sont configurés de telle sorte que la luminosité ou l'intensité des informations affichées le long des au moins deux directions de visualisation différentes est déterminée et commandée indépendamment en dépendance avec la direction d'incidence détectée du rayonnement électromagnétique.

2. Appareil d'affichage (100, 200, 300) selon la revendication 1, dans lequel le moyen de détection directionnel comprend en outre un ou plusieurs moyens de direction de rayonnement électromagnétique en association avec le ou des moyens de captage de rayonnement électromagnétique (121, 221, 321) respectifs permettant de diriger au moins une proportion de rayonnement électromagnétique entrant de manière à être incidente sur lui ou eux ; éventuellement
les moyens de direction de rayonnement électromagnétique comportent un ou plusieurs dispositifs de guide d'ondes (115) ou dispositifs de collimateur (370) ; et/ou
chaque moyen de direction de rayonnement électromagnétique est construit et agencé de telle sorte qu'un rayonnement électromagnétique entrant est incident sur différents moyens parmi les moyens de captage de rayonnement électromagnétique (121, 221, 321) avec différentes luminosités ou intensités, moyennant quoi différents moyens de captage de rayonnement électromagnétique peuvent connaître différentes luminosités ou intensités de rayonnement électromagnétique incident émanant d'une source de rayonnement électromagnétique donnée, et des différences qui en résultent entre des luminosités ou intensités de rayonnement électromagnétique détecté au niveau de différents moyens parmi les moyens de captage de rayonnement électromagnétique (121, 221, 321) ont pour résultat des différences correspondantes entre des sorties de signal des moyens de captage de rayonnement électromagnétique (121, 221, 321) respectifs ; éventuellement l'appareil d'affichage (100, 200, 300) comprend en outre des moyens de traitement permettant de comparer des différences dans des sorties de signal entre différents moyens de captage de rayonnement électromagnétique (121, 221, 321), et de déterminer ou de calculer sur la base de celles-ci une direction globale d'incidence de rayonnement électromagnétique entrant.

3. Appareil d'affichage (100, 200, 300) selon la revendication 1 ou la revendication 2, dans lequel le moyen de détection directionnel comprend une pluralité de moyens de direction de rayonnement électromagnétique chacun associé à un moyen respectif de la pluralité de moyens de captage de rayonnement électromagnétique (121, 221, 321), permettant de diriger au moins une proportion de rayonnement électromagnétique entrant de manière à être incidente sur différents moyens de la pluralité de moyens de captage de rayonnement électromagnétique (121, 221, 321) avec des luminosités ou des intensités respectives différentes ; ou, dans lequel le moyen de détection directionnel comprend un ou plusieurs moyens de direction de rayonnement électromagnétique étant, ou chacun étant, associés à deux ou plusieurs moyens de captage de rayonnement électromagnétique (121, 221, 321), permettant de diriger au moins une proportion de rayonnement électromagnétique entrant de manière à être incidente sur différents moyens parmi deux ou plusieurs moyens de captage de rayonnement électromagnétique (121, 221, 321) avec des luminosités ou des intensités respectives différentes.

4. Appareil d'affichage (100, 200, 300) selon l'une quelconque des revendications 1 à 3, dans lequel le moyen de détection directionnel comprend en outre un moyen de traitement permettant de recevoir des signaux de sortie de chacun des moyens de captage de rayonnement
électromagnétique (121, 221, 321), de comparer les signaux de sortie reçus, et de fournir une sortie aux moyens de commande (190, 290, 390) de l'appareil (100, 200, 300) qui est une fonction de la direction globale d'incidence du rayonnement électromagnétique sur le moyen de détection ; éventuellement la sortie du moyen de traitement qui est transférée aux moyens de commande (190, 290, 390) est corrélée d'une manière prédéterminée à un niveau optimisé de luminosité ou d'intensité requis par les moyens d'éclairage (112, 212, 312), de telle sorte qu'elle peut être éclairée sous la commande des moyens de commande (190, 290, 390) pour une visibilité ou une visualisation optimale de l'écran (110, 210, 310) lors de l'exposition au rayonnement électromagnétique entrant.

5. Appareil d'affichage (100, 200, 300) selon la revendication 2, dans lequel le moyen de détection directionnel comprend une pluralité de dispositifs sensibles au rayonnement électromagnétique agencés autour d'au moins un élément ou dispositif de guide d'ondes qui canalise, transmet ou propage alors le rayonnement électromagnétique incident dans ou sur les dispositifs sensibles au rayonnement électromagnétique autour de ceux-ci.

6. Appareil d'affichage (100, 200, 300) selon la revendication 5, dans lequel l'au moins un élément ou dispositif de guide d'ondes canalise, transmet ou propage alors un rayonnement électromagnétique incident dans ou sur des dispositifs respectifs parmi les dispositifs sensibles au rayonnement électromagnétique avec des luminosités ou des intensités respectivement différentes en dépendance avec la position relative de chaque dispositif sensible au rayonnement électromagnétique respectif par rapport à la direction d'incidence du rayonnement électromagnétique entrant sur l'au moins un élément ou dispositif de guide d'ondes ; éventuellement la pluralité de dispositifs sensibles au rayonnement électromagnétique sont situés et configurés de manière symétrique et/ou équi-angulaire autour de la périphérie ou du périmètre de, ou au niveau de ou adjacents à un bord latéral de, l'au moins un élément ou dispositif de guide d'ondes, moyennant quoi un rayonnement électromagnétique canalisé, transmis ou propagé à travers l'élément ou le dispositif de guide d'ondes est dirigé sur ou dans chaque dispositif sensible au rayonnement électromagnétique respectif avec une luminosité ou une intensité qui est dépendante du positionnement angulaire azimutal du dispositif sensible au rayonnement électromagnétique respectif par rapport à la direction d'incidence du rayonnement électromagnétique incident entrant.

7. Appareil d'affichage (200) selon la revendication 5 ou la revendication 6, dans lequel l'au moins un élément ou dispositif de guide d'ondes comprend un agencement d'un ou plusieurs, éventuellement une pluralité de, moyens réfléchissants (225), permettant de canaliser ou diriger par réflexion un rayonnement électromagnétique incident entrant sur ou dans les dispositifs sensibles au rayonnement électromagnétique respectifs positionnés autour de ceux-ci.

8. Appareil d'affichage (200) selon la revendication 7, dans lequel :
une pluralité de dispositifs sensibles au rayonnement électromagnétique à chacun desquels est associé un dispositif respectif d'une pluralité de dispositifs émetteurs de rayonnement électromagnétique de référence (223a) distal de ceux-ci et permettant de transmettre un faisceau de rayonnement électromagnétique de référence d'une luminosité ou d'une intensité de base par-delà et/ou adjacent à une face de visualisation de l'écran d'affichage (210) et sur ou dans le dispositif sensible au rayonnement électromagnétique respectif par l'intermédiaire d'un ou plusieurs parmi les moyens de réflexion (225),
un rayonnement électromagnétique incident entrant dont la propre luminosité ou intensité est dépendante du positionnement angulaire azimutal du dispositif sensible au rayonnement électromagnétique respectif par rapport à la direction d'incidence du rayonnement électromagnétique entrant incident, est également transmis sur ou dans ledit dispositif sensible au rayonnement électromagnétique respectif au moins partiellement par le ou les moyens de réflexion respectifs (225), la lumière incidente entrante se combinant avec le faisceau de référence pour créer un faisceau combiné de luminosité ou d'intensité accrue en comparaison avec celle du faisceau de référence seul, et
l'appareil comprend en outre des moyens comparateurs permettant de calculer une différence entre ladite luminosité/intensité de base de chaque faisceau de rayonnement électromagnétique de référence et une luminosité ou intensité respective du faisceau combiné au niveau de chaque dispositif sensible au rayonnement électromagnétique respectif, et de générer une sortie de signal respective qui est dépendante de ladite différence de luminosité/intensité entrante de base et incidente au niveau de ce dispositif sensible au rayonnement électromagnétique respectif,
dans lequel les sorties de signal des divers dispositifs sensibles au rayonnement électromagnétique sont ensuite traités par le moyen de traitement qui reçoit les sorties de signal de chacun des dispositifs sensibles au rayonnement électromagnétique, compare les signaux de sortie reçus, et fournit une sortie au moyen de commande de l'appareil qui est dépendante de la direction globale d'incidence du rayonnement électromagnétique sur le moyen de détection.

9. Appareil d'affichage (300) selon la revendication 2, dans lequel le moyen de détection directionnel comprend une pluralité de dispositifs sensibles au rayonnement électromagnétique chacun associé à un dispositif respectif parmi, ou à une partie respective de, un ou plusieurs dispositifs de collimation (370) permettant de canaliser un rayonnement électromagnétique incident sur ou dans le dispositif sensible au rayonnement électromagnétique respectif, ou chaque dispositif respectif.

10. Appareil d'affichage (100, 200, 300) selon l'une quelconque revendication précédente, dans lequel les moyens de commande (190, 290, 390) comportent une saisie de commande permettant de recevoir un signal de sortie généré par un moyen de traitement du moyen de détection, qui a mesuré la direction globale d'incidence de rayonnement électromagnétique entrant sur l'appareil, lequel signal de sortie du moyen de détection est corrélé à un niveau prédéterminé d'éclairage des moyens d'éclairage (112, 212, 312) permettant d'obtenir une visibilité ou une visualisation optimale de l'écran à éclairer par celui-ci, et une sortie de commande permettant de commander les moyens d'éclairage (112, 212, 312) d'une manière corrélée conformément au signal de sortie du moyen de détection saisi.

11. Véhicule comportant un appareil d'affichage (100, 200, 300) selon l'une quelconque des revendications 1 à 10.

12. Procédé d'affichage d'informations sur un appareil d'affichage, l'appareil comportant un moyen d'éclairage permettant d'éclairer un écran par l'intermédiaire duquel des informations sont visiblement affichables à un visualisateur, dans lequel le procédé comprend :
la détection de rayonnement électromagnétique incident sur l'appareil à l'aide d'une pluralité de moyens de captage de rayonnement électromagnétique, disposés autour de l'appareil ou de l'écran de celui-ci ; et
la commande des moyens d'éclairage en dépendance avec le rayonnement électromagnétique incident détecté ;
dans lequel la détection de rayonnement électromagnétique incident sur l'appareil comprend la détection d'une direction à partir de laquelle le rayonnement électromagnétique est incident sur celui-ci par au moins deux paramètres directionnels du rayonnement électromagnétique incident, lesdits au moins deux paramètres directionnels comportant (i) un angle d'incidence entre les rayons de rayonnement électromagnétique incident et une normale au moyen de détection ou un plan de référence contenant le moyen de détection, et (ii) un angle d'azimut des rayons de rayonnement électromagnétique incident par rapport à un axe de référence défini par le moyen de détection ou par l'écran,
et la commande des moyens d'éclairage comprend la commande des moyens d'éclairage en dépendance avec la direction d'incidence détectée du rayonnement électromagnétique,
dans lequel l'écran est un écran visualisable de manière bidirectionnelle ou multidirectionnelle, où différentes images, ou des images données de différentes luminosités ou intensités, sont générées pour être visualisées à partir d'au moins deux directions ou angles de visualisation différents par rapport à l'écran, et le procédé comprend la détermination et la commande de la luminosité ou de l'intensité des informations affichées le long des au moins deux directions de visualisation différentes indépendamment en dépendance avec la direction d'incidence détectée du rayonnement électromagnétique.

13. Système de commande d'éclairage d'un écran (110, 210, 310) d'un appareil d'affichage (100, 200, 300), l'appareil (100, 200, 300) comportant des moyens d'éclairage (112, 212, 312) permettant d'éclairer un écran (110, 210, 310) par l'intermédiaire duquel des informations sont visiblement affichables à un visualisateur, dans lequel le système comprend :
un moyen de détection permettant de détecter un rayonnement électromagnétique incident sur l'appareil (100, 200, 300) ; et
des moyens de commande (190, 290, 390) permettant de commander les moyens d'éclairage (112, 212, 312) en dépendance avec le rayonnement électromagnétique incident détecté par le moyen de détection ;
dans lequel le moyen de détection est un moyen de détection directionnel comprenant une pluralité de moyens de captage de rayonnement électromagnétique (121, 221, 321), disposés autour de l'appareil (100, 200, 300) ou de l'écran (110, 210, 310) de celui-ci, permettant de détecter une direction à partir de laquelle le rayonnement électromagnétique est incident sur celui-ci par au moins deux paramètres directionnels du rayonnement électromagnétique incident, lesdits au moins deux paramètres directionnels comportant (i) un angle d'incidence entre les rayons de rayonnement électromagnétique incident et une normale au moyen de détection ou un plan de référence contenant le moyen de détection, et (ii) un angle d'azimut des rayons de rayonnement électromagnétique incident par rapport à un axe de référence défini par le moyen de détection ou l'écran, et les moyens de commande sont actionnables pour commander le moyen d'éclairage en dépendance avec la direction d'incidence détectée du rayonnement électromagnétique ; et
dans lequel l'écran (110, 210, 310) est un écran visualisable de manière bidirectionnelle ou multidirectionnelle, où différentes images, ou des images données de différentes luminosités ou intensités, sont générées pour être visualisées à partir d'au moins deux directions ou angles de visualisation différents par rapport à l'écran (110, 210, 310), et les moyens de commande (190, 290, 390) sont configurés de telle sorte que la luminosité ou l'intensité des informations affichées le long des au moins deux directions de visualisation différentes est déterminée et commandée indépendamment en dépendance avec la direction d'incidence détectée du rayonnement électromagnétique.

14. Procédé de commande d'éclairage d'un écran d'un appareil d'affichage, l'appareil comportant des moyens d'éclairage permettant d'éclairer l'écran par l'intermédiaire duquel des informations sont visiblement affichables à un visualisateur, dans lequel le procédé comprend :
la détection de rayonnement électromagnétique incident sur l'appareil à l'aide d'une pluralité de moyens de captage de rayonnement électromagnétique, disposés autour de l'appareil ou de l'écran de celui-ci ; et
la commande des moyens d'éclairage en dépendance avec le rayonnement électromagnétique incident détecté ;
dans lequel la détection de rayonnement électromagnétique incident sur l'appareil comprend la détection d'une direction à partir de laquelle le rayonnement électromagnétique est incident sur celui-ci par au moins deux paramètres directionnels du rayonnement électromagnétique incident, lesdits au moins deux paramètres directionnels comportant (i) un angle d'incidence entre les rayons de rayonnement électromagnétique incident et une normale au moyen de détection ou un plan de référence contenant le moyen de détection, et (ii) un angle d'azimut des rayons de rayonnement électromagnétique incident par rapport à un axe de référence défini par le moyen de détection ou par l'écran, et
la commande des moyens d'éclairage comprend la commande des moyens d'éclairage en dépendance avec la direction d'incidence détectée du rayonnement électromagnétique,
dans lequel l'écran est un écran visualisable de manière bidirectionnelle ou multidirectionnelle, où différentes images, ou des images données de différentes luminosités ou intensités, sont générées pour être visualisées à partir d'au moins deux directions ou angles de visualisation différents par rapport à l'écran, et le procédé comprend la détermination et la commande de la luminosité ou de l'intensité des informations affichées le long des au moins deux directions de visualisation différentes indépendamment en dépendance avec la direction d'incidence détectée du rayonnement électromagnétique.
